(19) Europäisches Patentamt
European Patent Office
Office européen des brevets

(11) EP 0 336 127 B2

(12) NEUE EUROPÄISCHE PATENTSCHRIFT

(45) Veröffentlichungstag und Bekanntmachung des Hinweises auf die Entscheidung über den Einspruch:
**09.04.1997 Patentblatt 1997/15**

(45) Hinweis auf die Patenterteilung:
**20.01.1993 Patentblatt 1993/03**

(21) Anmeldenummer: **89103941.4**

(22) Anmeldetag: **07.03.1989**

(51) Int Cl.[6]: **C08F 4/642**, C08F 10/00

(54) **Verfahren zur Herstellung von 1-Olefinpolymeren**

Process for preparing poly-alpha-olefins

Procédé de préparation de polymères d'alpha-oléfines

(84) Benannte Vertragsstaaten:
**BE DE ES FR GB IT NL**

(30) Priorität: **12.03.1988 DE 3808267**

(43) Veröffentlichungstag der Anmeldung:
**11.10.1989 Patentblatt 1989/41**

(73) Patentinhaber: **HOECHST AKTIENGESELLSCHAFT**
**65926 Frankfurt am Main (DE)**

(72) Erfinder:
- **Winter, Andreas, Dr.**
  **D-6233 Kelkheim (Taunus) (DE)**
- **Dolle, Volker, Dr.**
  **D-6233 Kelkheim (Taunus) (DE)**
- **Antberg, Martin, Dr.**
  **D-6238 Hofheim am Taunus (DE)**
- **Rohrmann, Jürgen, Dr.**
  **D-8056 Neufahrn (DE)**
- **Spaleck, Walter, Dr.**
  **D-6237 Liederbach (DE)**

(56) Entgegenhaltungen:
**EP-A- 0 128 046**
**EP-A- 0 232 595**
**EP-A- 0 284 707**
**EP-A- 0 284 708**
**EP-A- 0 302 424**
**EP-A- 0 320 762**

- **Proceedings of an International Symposium, Hamburg, September 1987, S. 21-24, W. Kaminsky et al. (Eds), Springer-Verlag**

Bemerkungen:
Die Akte enthält technische Angaben, die nach dem Eingang der Anmeldung eingereicht wurden und die nicht in dieser Patentschrift enthalten sind.

EP 0 336 127 B2

## Beschreibung

Die Erfindung bezieht sich auf ein Verfahren zur Herstellung von 1-Olefinpolymeren mit hoher Isotaktizität, enger Molmassenverteilung und hoher Molmasse.

Lösliche Metallocenkatalysatoren auf Basis von Bis(cyclopentadienyl)zirkon-alkyl oder Bis(cyclopentadienyl)zirkon-halogenid in Kombination mit oligomeren Aluminoxanen sind bekannt. Mit diesem System können Ethylen und Propylen mit mäßiger Aktivität polymerisiert werden, man erhält jedoch kein isotaktisches Polypropylen.

Weiterhin ist von dem Katalysatorsystem Bis(cyclopentadienyl)titandiphenyl/Methylaluminoxan bekannt, daß es Propylen in Stereoblockpolymere, dh. Polypropylen mit mehr oder weniger langen isotaktischen Sequenzen, umzuwandeln vermag (vgl. US-PS 4 522 982). Deutliche Nachteile dieses Katalysatorsystems sind die technisch irrelevanten Polymerisationstemperaturen (0° C bis -60° C) und die völlig unbefriedigenden Katalysatoraktivitäten.

Die Herstellung von isotaktischem Polypropylen gelingt mit Hilfe des Ethylen- bis(4,5,6,7-tetrahydro-1-indenyl) zirkondichlorids zusammen mit einem Aluminoxan in einer Suspensionspolymerisation (vgl. EP-A 185 918). Das Polymer besitzt eine enge Molmassenverteilung, was für bestimmte Anwendungen, beispielsweise für den Hochleistungsspritzguß, von Vorteil ist.

Gleichzeitig besitzt das Katalysatorsystem eine Reihe von Mängeln.

Die Polymerisation wird in Toluol durchgeführt, welches sehr aufwendig gereinigt und von Feuchtigkeit und Sauerstoff befreit werden muß. Außerdem ist die Schüttdichte des Polymers zu gering, die Kornmorphologie und die Korngrößenverteilung unbefriedigend.

Gravierender Nachteil des Katalysatorsystems ist jedoch, daß bei technisch interessanten Polymerisationstemperaturen nur Polymere mit unakzeptabel niedrigen Molmassen hergestellt werden können.

Es wurde auch eine spezielle Voraktivierungsmethode des Metallocens mit einem Aluminoxan vorgeschlagen, welche zu einer beachtlichen Steigerung der Aktivität des Katalysatorsystems und zu einer deutlichen Verbesserung der Kornmorphologie des Polymeren führt (vgl. DE 37 26 067). Diese Voraktivierung beeinflußt jedoch nicht wesentlich die Höhe der Molmasse.

Weiterhin sind Katalysatoren auf Basis Ethylenbisindenylhafniumdichlorid und Ethylen-bis(4,5,6,7 - tetrahydro-1-indenyl)hafniumdichlorid und Methylaluminoxan bekannt, mit denen durch Suspensionspolymerisation höhermolekulare Polypropylene hergestellt werden können (vgl. J. A. Ewen et al., J. Am.Chem.Soc. 109 (1987) 6544). Unter technisch interessanten Polymerisationsbedingungen ist jedoch die Höhe der Molmasse der derart erzeugten Polymeren noch nicht befriedigend.

In EP-A- 302 424, EP-A- 320 762, EP-A- 284 708 und Proceedings of an International Symposium Hamburg, 21.-24. September 1987 wird die Olefinpolymerisation in gegenwart von Dimethylsilyl-bis(1-indenyl)zirkoniumdichlorid beschrieben.

Es bestand daher die Aufgabe, einen Katalysator zu finden, der Polymere mit noch höherer Molmasse erzeugt.

Es wurde gefunden, daß die Verwendung von heteroatomverbrückten Hafnocensystemen eine deutliche Steigerung der Molmasse ermöglicht.

Die Erfindung betrifft somit ein Verfahren zur Herstellung eines 1-Olefinpolymers durch Polymerisation eines 1-Olefins der Formel $R-CH=CH_2$, worin R eine Alkylgruppe mit 1 bis 28 C-Atomen ist, oder Copolymerisation dieser Olefine untereinander oder mit Ethylen, bei einer Temperatur von - 60 bis 200° C, bei einem Druck von 0,5 bis 60 bar, in Lösung, in Suspension oder in der Gasphase, in Gegenwart eines Katalysators, welcher aus einem Metallocen als Übergangsmetallverbindung und einem Aluminoxan der Formel (II)

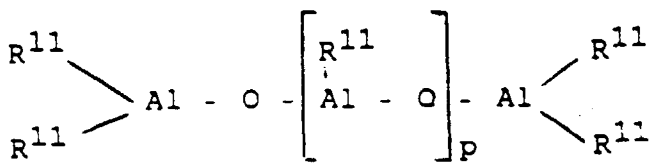

(II)

für den linearen Typ und/oder der Formel (III)

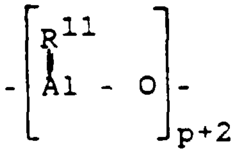

(III)

für den cyclischen Typ, wobei in den Formeln (II) und (III) $R^{11}$ eine $C_1$-$C_6$-Alkylgruppe bedeutet und p eine ganze Zahl von 2 bis 50 ist, besteht, dadurch gekennzeichnet, daß die Polymerisation in Gegenwart eines Katalysators durchgeführt wird, dessen Übergangsmetallkomponente eine Verbindung ist der Formel (I)

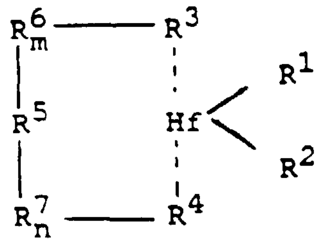

(I)

worin $R^1$ und $R^2$ gleich oder verschieden sind und ein Wasserstoffatom, ein Halogenatom, eine $C_1$-$C_{10}$-Alkylgruppe eine $C_6$-$C_{10}$-Arylgruppe, eine $C_2$-$C_{10}$-Alkenylgruppe, eine $C_7$-$C_{40}$-Arylalkylgruppe, eine $C_7$-$C_{40}$-Alkylarylgruppe oder eine $C_8$-$C_{40}$-Arylalkenylgruppe bedeuten, $R^3$ und $R^4$ gleich oder verschieden sind und einen ein oder mehrkernigen Kohlenwasserstoffrest, welcher mit dem Zentralatom eine Sandwichstruktur bilden kann, bedeuten, $R^5$

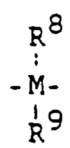 , 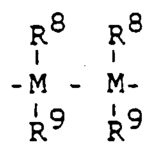 , 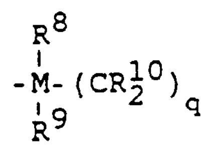 , 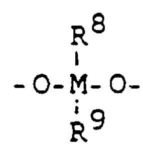 ;

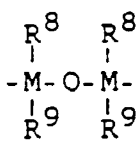 , 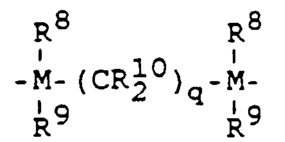 , 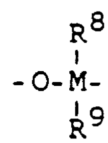

$=BR^8$, $=AlR^8$, -Ge-, -Sn-, -O-, -S-, =S=O, $=SO_2$, $=NR^8$, $=PR^8$ oder $=P(O)R^8$ bedeutet, wobei $R^8$, $R^9$ und $R^{10}$ gleich oder verschieden sind und $R^8$ eine $C_6$-$C_{10}$-Arylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeutet und $R^9$ und $R^{10}$ ein Wasserstoffatom, ein Halogenatom, eine $C_1$-$C_{10}$-Alkylgruppe, eine $C_6$-$C_{10}$-Arylgruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder $R^8$ und $R^9$ oder $R^8$ und

$R^{10}$ jeweils zusammen mit den sie verbindenden Atomen einen Ring bilden,
M Silizium, Germanium oder Zinn und q 1, 2 oder 3 bedeuten,
$R^6$ und $R^7$ gleich oder verschieden sind und eine Gruppe $=CR^8R^9$ bedeuten, wobei $R^8$ und $R^9$ die obengenannte Bedeutung haben,
m und n gleich oder verschieden sind und null, 1 oder 2 bedeuten, wobei m+n null, 1 oder 2 ist,

und daß gegebenenfalls das Metallocen der Formel(I) vor dem Einsatz in der Polymerisationsreaktion mit einem Aluminoxan der Formel(II) und/oder (III) voraktiviert wird.

Für das erfindungsgemäße Verfahren können verschiedene Übergangsmetallkomponenten eingesetzt werden. Diese sind stereorigide, chirale Metallocene der Formel (I)

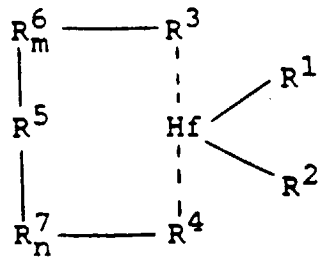

(I)

$R^1$ und $R^2$ sind gleich oder verschieden und bedeuten ein Wasserstoffatom, eine $C_1$-$C_{10}$-, vorzugsweise

$C_1$-$C_3$-Alkylgruppe, eine $C_6$-$C_{10}$-, vorzugsweise
$C_6$-$C_8$-Arylgruppe, eine $C_2$-$C_{10}$-, vorzugsweise
$C_2$-$C_4$-Alkenylgruppe, eine $C_7$-$C_{40}$-, vorzugsweise
$C_7$-$C_{10}$-Arylalkylgruppe, eine $C_7$-$C_{40}$- vorzugsweise
$C_7$-$C_{12}$-Alkylarylgruppe, eine $C_8$-$C_{40}$-, vorzugsweise
$C_8$-$C_{12}$-Arylalkenylgruppe oder ein Halogenatom, vorzugsweise Chlor.

$R^3$ und $R^4$ sind gleich oder verschieden, vorzugsweise gleich, und bedeuten einen ein- oder mehrkernigen Kohlenwasserstoffrest, welcher zusammen mit dem Zentralatom eine Sandwichstruktur bilden kann. Beispiele für derartige Reste sind die Indenyl-, Tetrahydroindenyl- oder Cyclopentadienylgruppe und Heteroaromatenliganden.
$R^5$ ist

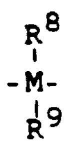 , 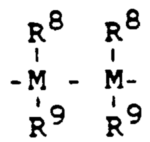 , 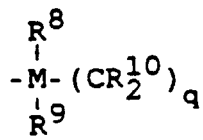 , 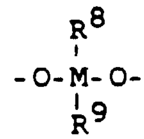 ,

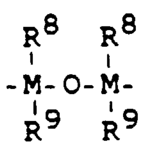 , 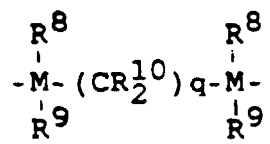 , 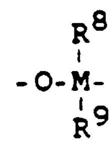 ,

$=BR^8$, $=AlR^8$, -Ge-, -Sn-, -O-, -S-, =S=O, $=SO_2$, $=NR^8$, $=PR^8$ oder $=P(O)R^8$, wobei $R^8$, $R^9$ und $R^{10}$ gleich oder verschieden sind und
$R^8$ eine $C_6$-$C_{10}$-Arylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeutet und $R^9$ und $R^{10}$ ein Wasserstoffatom, ein Halogenatom, vorzugsweise Fluor, eine $C_1$-$C_{10}$-, vorzugsweise $C_1$-$C_4$-Alkylgruppe, eine $C_6$-$C_{10}$-, vorzugsweise $C_6$-$C_8$-Arylgruppe, eine $C_2$-$C_{10}$-, vorzugsweise $C_2$-$C_4$-Alkenylgruppe, eine $C_7$-$C_{40}$-, vorzugsweie $C_7$-$C_{10}$-Arylalkylgruppe, eine $C_8$-$C_{40}$-, vorzugsweise $C_8$-$C_{12}$-Arylalkenylgruppe oder eine $C_7$-$C_{40}$-, vorzugsweise $C_7$-$C_{12}$-Alkylarylgruppe bedeuten oder $R^8$ und $R^9$ oder $R^8$ und $R^{10}$ bilden jeweils zusammen mit den sie verbindenden Atomen einen Ring. M ist Si, Ge oder Sn und q ist 1, 2 oder 3,
$R^5$ ist vorzugsweise $=SiR^8R^9$, -S-, =S=O oder $=PR^8$,
$R^6$ und $R^7$ sind gleich oder verschieden und bedeuten eine Gruppe $=CR^8R^9$, worin $R^8$ und $R^9$ die obengenannte Bedeutung haben,
m und n sind gleich oder verschieden und bedeuten null, 1 oder 2, wobei m+n null, 1 oder 2 ist. Vorzugsweise sind m und n null oder 1.

Die optisch aktiven Metallocene werden als Racemat zur Herstellung von hochisotaktischen Poly-1-olefinen eingesetzt. Verwendet werden kann aber auch die reine R- oder S-Form. Mit diesen reinen stereoisomeren Formen ist

optisch aktives Polymeres herstellbar. Abgetrennt werden muß jedoch die meso-Form der Metallocene, da das polymerisationsaktive Zentrum (das Metallatom) in diesen Verbindungen wegen Spiegelsymmetrie am Zentralmetall nicht mehr chiral ist und daher kein hochisotaktisches Polymeres erzeugen kann.

Die Trennung der Stereoisomeren ist im Prinzip bekannt.

Die vorstehend beschriebenen Metallocene können nach folgendem Reaktionsschema hergestellt werden:

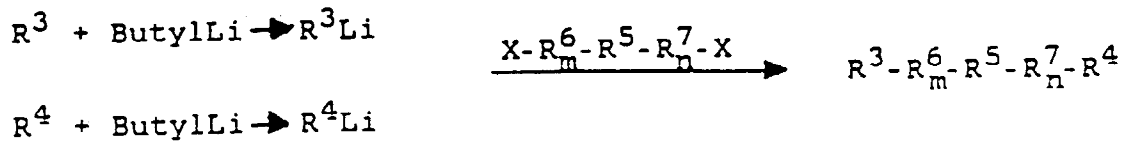


(X = Cl, Br, O-Tosyl)

$$R^3\text{-}R^6_m\text{-}R^5\text{-}R^7_nR^4 + 2\ \text{ButylLi} \rightarrow \text{LiR}^3\text{-}R^6_m\text{-}R^5\text{-}R^7_n\text{-}R^4\text{Li}$$

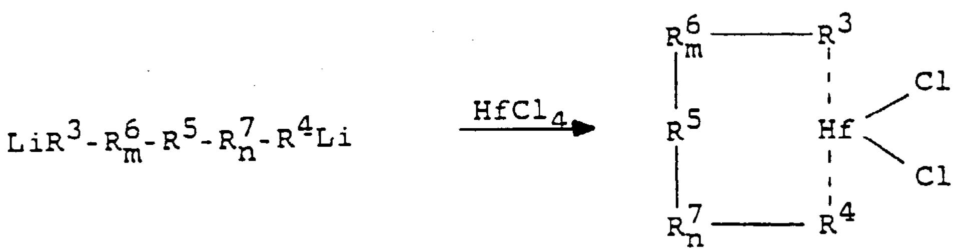


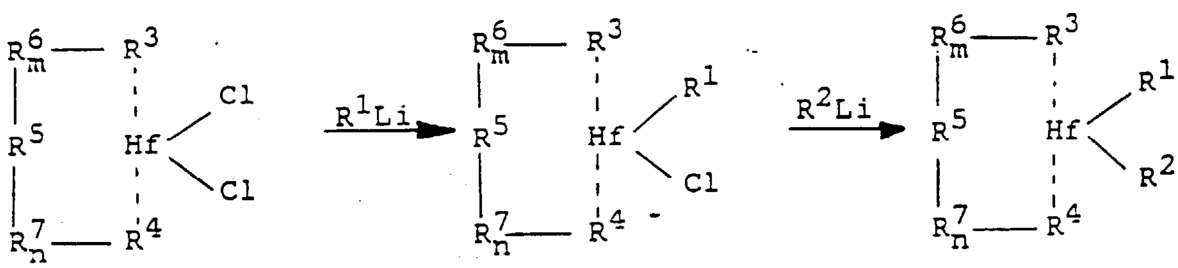


Die besonders bevorzugt eingesetzten Metallocenverbindungen sind rac-Bisindenyl(arylalkylsilyl)-hafniumdichloride.

Der Aktivator ist ein Aluminoxan der Formel (II)

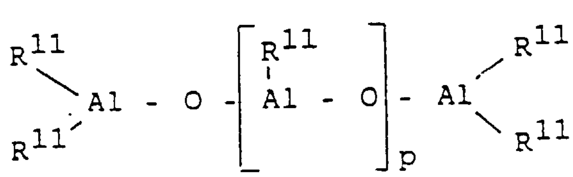

(II)

für den linearen Typ und/oder der Formel (III)

$$-\left[ \begin{array}{l} R^{11} \\ | \\ Al - O \end{array} \right]_{p+2}- \qquad (III)$$

für den cyclischen Typ. In diesen Formeln bedeuten $R^{11}$ eine $C_1$-$C_6$-Alkylgruppe, vorzugsweise Methyl, Ethyl oder Isobutyl, insbesondere Methyl, und p eine ganze Zahl von 2 bis 50, bevorzugt 15 bis 40.

Das Aluminoxan kann beispielsweise auf verschiedene Art und Weise hergestellt werden.

Bei einem der Verfahren wird fein gepulvertes Kupfersulfatpentahydrat in Toluol aufgeschlämmt und in einem Glaskolben unter Inertgas bei etwa -20° C mit soviel Aluminiumtrialkyl versetzt, daß für je 4 Al-Atome etwa 1 mol $CuSO_4 \cdot 5H_2O$ zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30°C ansteigt. Anschließend wird das im Toluol gelöste Aluminoxan von dem Kupfersulfat abfiltriert und die Lösung unter Vakuum eingeengt. Es wird angenommen, daß bei diesem Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100° C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1:1 bis 50:1 - vorzugsweise 5:1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen $Al_2(SO_4)_3 \cdot 18H_2O$ und $Al_2(SO_4)_3 \cdot 16H_2O$ mit dem besonders hohen Kristallwassergehalt von 18 bzw. 16 mol $H_2O$/mol $Al_2(SO_4)_3$.

Eine weitere Variante zur Herstellung von Aluminoxanen besteht darin, Aluminiumtrialkyl, vorzugsweise Aluminiumtrimethyl, in dem im Polymerisationskessel vorgelegten Suspensionsmittel, vorzugsweise im flüssigen Monomeren, in Heptan oder Toluol, zu lösen und dann die Aluminiumverbindung mit Wasser umzusetzen.

Neben den zuvor geschilderten Verfahren zur Herstellung von Aluminoxanen gibt es weitere, welche brauchbar sind.

Es wird bevorzugt, das Metallocen vor dem Einsatz in der Polymerisationsreaktion mit einem Aluminoxan der Formel (II) und/oder (III) vorzuaktivieren. Dadurch wird die Polymerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff.

Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100 °C, vorzugsweise 0 bis 70° C.

Eine deutlich längere Voraktivierung ist möglich, sie wirkt sich normalerweise jedoch weder aktivitätssteigernd noch aktivitätsmindernd aus, kann jedoch zu Lagerzwecken durchaus sinnvoll sein.

Eine Voraktivierung erhöht die Molmasse des Polymeren praktisch nicht. Vorzugsweise wird das gleiche Aluminoxan zur Voraktivierung und zur Polymerisation verwendet.

Der erfindungsgemäß zu verwendende Katalysator wird zur Polymerisation von 1-Olefinen der Formel R-CH = $CH_2$, in der R einen Alkylrest mit 1 bis 28 C-Atomen, vorzugsweise 1 bis 10 C-Atomen, insbesondere einem C-Atom bedeutet, eingesetzt, beispielsweise Propylen, Buten-(1), Hexen-(1), 4-Methylpenten-(1), Octen-(1). Besonders bevorzugt ist Propylen. Ferner wird der Katalysator auch zur Copolymerisation dieser Olefine untereinander oder mit Ethylen eingesetzt, wobei mehr als 50 Gew.-% Ethylen einpolymerisiert werden können.

Die Polymerisation wird in bekannter Weise in Lösung, in Suspension oder in der Gasphase, kontinuierlich oder diskontinuierlich, ein- oder mehrstufig bei einer Temperatur von -60 bis 200° C, vorzugsweise -20 bis 120, insbesondere 0 bis 80°C, durchgeführt. Der Druck beträgt 0,5 bis 60 bar. Bevorzugt ist die Polymerisation in dem technisch besonders interessanten Druckbereich von 5 bis 60 bar.

Dabei wird die Metallocenverbindung in einer Konzentration, bezogen auf das Übergangsmetall, von $10^{-3}$ bis $10^{-7}$, vorzugsweise $10^{-4}$ bis $10^{-6}$ mol Übergangsmetall pro $dm^3$ Lösemittel bzw. pro $dm^3$ Reaktorvolumen angewendet. Das Aluminoxan wird in einer Konzentration von $10^{-4}$ bis $10^{-1}$ mol, vorzugsweise $10^{-3}$ bis $10^{-2}$ mol pro $dm^3$ Lösemittel bzw. pro $dm^3$ Reaktorvolumen verwendet. Prinzipiell sind aber auch höhere Konzentrationen möglich.

Es ist vorteilhaft, das Aluminoxan vor Zugabe des Metallocens in das Polymerisationssystem erst einige Minuten zusammen mit der Polymerisationsflüssigphase zu rühren. Die Rührzeit beträgt vorzugsweise 10 bis 30 Minuten. Es kann jedoch ohne größere Einbußen auch kürzere Zeit gerührt werden, eine längere Rührzeit hat auf das Ergebnis der Polymerisation keine nennenswerte Wirkung.

Die Polymerisation wird in einem für das Ziegler-Niederdruckverfahren gebräuchlichen inerten Lösemittel durchgeführt. Beispielsweise in einem aliphatischen oder cycloaliphatischen Kohlenwasserstoff; als solcher sei beispielsweise Butan, Pentan, Hexan, Heptan, Isooctan, Cyclohexan, Methylcyclohexan genannt. Weiterhin kann eine Benzin- bzw. hydrierte Dieselölfraktion, die sorgfältig von Sauerstoff, Schwefelverbindungen und Feuchtigkeit befreit worden ist, benutzt werden. Brauchbar ist auch Toluol. Bevorzugt wird das zu polymerisierende Monomere als Lösemittel oder Suspensionsmittel eingesetzt. Die Molmasse des Polymerisats kann in bekannter Weise geregelt werden; vorzugsweise wird dazu Wasserstoff verwendet. Die Dauer der Polymerisation ist beliebig, da das erfindungsgemäß zu verwendende Katalysatorsystem einen nur geringen zeitabhängigen Abfall der Polymerisationsaktivität zeigt.

Die mittels des erfindungsgemäßen Verfahrens hergestellten Polymeren weisen eine hohe Molmasse, eine sehr enge Molmassenverteilung und eine hohe Isotaktizität auf.

Während Polymere, hergestellt mit den auf Zirkon basierenden Metallocenen die bekannte Abhängigkeit der Molmasse von der Polymerisationstemperatur zeigen (steigende Polymerisationstemperatur führt zu fallenden Molmassen der Polymeren), wurde gefunden, daß die homologen Hafniumsysteme bei höherer Polymerisationstemperatur gleichzeitig auch Polymere mit höherer Molmasse erzeugen. Bei Verwendung von Heteroatomen-verbrückten Hf-Metallocenen wird dabei die Molmasse gegenüber Metallocenen mit einer Kohlenstoffbrücke nochmals angehoben. Weiterhin ist bei hoher Polymerisationstemperatur gleichzeitig auch die Aktivität deutlich höher als bei niedrigeren Polymerisationstemperaturen.

Die nachfolgenden Beispiele sollen die Erfindung erläutern. Es bedeuten

| | |
|---|---|
| VZ = | Viskositätszahl in $cm^3/g$, |
| $M_w$ = | Molmassengewichtsmittel in g/mol, |
| $M_w/M_n$ = | Molmassenverteilung ermittelt durch Gelpermeationschromatographie (GPC) und |
| II = | Isotaktischer Index, bestimmt durch $^{13}C$-NMR-Spektroskopie |

**Vergleichsbeispiel A**

Ein trockener 16 $dm^3$ - Kessel wurde mit Stickstoff gespült und mit 10 $dm^3$ flüssigem Propylen befüllt.

Dann wurden 70 $cm^3$ toluolische Methylaluminoxanlösung (entsprechend 68 mmol Al, mittlerer Oligomerisierungsgrad n=30) zugegeben und der Ansatz bei 30°C 15 Minuten gerührt. Parallel dazu wurden 50,8 mg (0,095 mmol) rac-Bisindenyl(dimethylsilyl)hafniumdichlorid in 35 $cm^3$ toluolischer Methylaluminoxanlösung (34 mmol Al) gelöst und durch 30 minütiges Stehenlassen voraktiviert.

Die Lösung wurde dann in den Kessel gegeben.

Das Polymerisationssystem wurde auf eine Temperatur von 70°C gebracht und 5 h bei dieser Temperatur gehalten. Es wurden 2,15 kg Polypropylen erhalten. Die Aktivität des Metallocens betrug 8,5 kg PP/g Metallocen x h.

VZ = 152 $cm^3/g$, $M_w$ = 168400, $M_w/M_n$ = 2,4, II = 94,3 %, Schmp. 155°C

**Vergleichsbeispiel B**

Ein trockener 16 $dm^3$-Kessel wurde mit Stickstoff gespült und mit 10 $dm^3$ flüssigem Propylen befüllt.

Dann wurden 50 $cm^3$ toluolische Methylaluminoxanlösung (entsprechend 68 mmol Al, mittlerer Oligomerisierungsgrad n = 30) zugegeben und der Ansatz bei 30°C 15 Minuten gerührt.

Parallel dazu wurden 51,3 mg (0,096 mmol) rac-Bisindenyl(dimethylsilyl)hafniumdichlorid in 25 $cm^3$ toluolischer Methylaluminoxanlösung (34 mmol Al) gelöst und durch 15- minütiges Stehenlassen voraktiviert. Die Lösung wurde dann in den Kessel gegeben.

Das Polymerisationssystem wurde auf eine Temperatur von 60°C gebracht und dann 5 h bei dieser Temperatur gehalten. Es wurden 1,08 kg Polypropylen erhalten. Die Aktivität des Metallocens betrug somit 4,2 kg PP/g Metallocen x h.

VZ = 105 $cm^3/g$, $M_w$ = 110900, $M_w/M_n$ = 2,0, II = 95,0 %, Schmp. 145°C.

**Vergleichsbeispiel C**

Es wurde analog zu Vergleichsbeispiel B verfahren, jedoch wurden 24,9 mg (0,05 mmol) rac-Ethylenbisindenylhafniumdichlorid eingesetzt, die Polymerisationszeit betrug 4 h.
Es wurden 1,18 kg Polypropylen erhalten. Die Aktivität des Metallocens betrug somit 11,8 kg PP/g Metallocen x h.
VZ = 65 $cm^3$/g, $M_w$ = 60900, $M_w/M_n$ = 2,5, II = 94,8 %, Schmp. 135°C.

**Vergleichsbeispiel D**

Analog zu Vergleichsbeispiel A wurden 25,2 mg (o,o47 mmol) rac-Bisindenyl(dimethylsilyl)hafniumdichlorid verwendet und die Polymerisationszeit betrug 10 h.
Es wurden 2,31 kg Polypropylen erhalten. Die Aktivität des Metallocens betrug 9,2 kg PP/g Metallocen x h.
VZ = 149 $cm^3$/g, $M_w$ = 162800, $M_w/M_n$ = 2,1, II = 95,1 %, Schmp. 156°C.

Vergleichsbeispiel E

Es wurden analog zu Vergleichsbeispiel A verfahren, die Polymerisationszeit betrug jedoch 2 h. 1,09 kg Polypropylen wurden erhalten. Die Aktivität des Metallocens betrug 10,7 kg PP/g Metallocen x h.
VZ = 167 $cm^3$/g, $M_w$ = 172100, $M_w/M_n$ = 2,3, II = 95,0 %, Schmp. 156°C.

**Beispiel 1**

Ein trockener 16 $dm^3$-Kessel wurde mit Stickstoff gespült und mit 10 $dm^3$ flüssigem Propylen befüllt.
Dann wurden 50 $cm^3$ toluolische Methylaluminoxanlösung (entsprechend 68 mmol Al, mittlerer Oligomerisierungsgrad n = 23) zugegeben und der Ansatz bei 30 °C 15 Minuten gerührt.
Parallel dazu wurden 25,7 mg (0,043 mmol)
rac-Bisindenyl(phenylmethylsilyl)hafniumdichlorid in 25 $cm^3$ toluolischer Methylaluminoxanlösung (34 mmol Al) gelöst und durch 15 minütiges Stehenlassen voraktiviert.
Die Lösung wurde dann in den Kessel gegeben. Das Polymerisationssystem wurde auf eine Temperatur von 70 °C gebracht und 5 h bei dieser Temperatur gehalten. Es wurden 320 g Polypropylen erhalten.
Die Aktivität des Metallocens betrug somit 2,5 kg PP/g Metallocen x h.
VZ = 247 $cm^3$/g, $M_w$ = 288400, $M_w/M_n$ = 2,6, II = 96,4 %.

**Beispiel 2**

Es wurde analog zu Beispiel 1 verfahren, jedoch wurden 25 mg (0,047 mmol) rac-Bisindenyl(dimethylsilyl)hafniumdichlorid verwendet.
Es wurden 1,03 kg Polypropylen erhalten.
Die Aktivität des Metallocens betrug 8,2 kg PP/g Metallocen x h.
VZ = 147 $cm^3$/g, $M_w$ = 161625, $M_w/M_n$ = 2,5, II = 94,8 %, Schmp. 156 °C.

**Beispiel 3**

Es wurde analog zu Beispiel 1 verfahren, jedoch wurden 71,0 mg (0,119 mmol) rac-Bisindenyl(phenylmethylsilyl) hafniumdichlorid verwendet, die Polymerisationstemperatur betrug 60 °C.
Es wurden 220 g Polypropylen erhalten.
Die Aktivität des Metallocens betrug somit 619 g PP/g
Metallocen x h.
VZ = 181 $cm^3$/g, $M_w$ = 205900, $M_w/M_n$ = 2,3, II = 98,5 %.

**Beispiel 4**

Es wurde wie in Beispiel 1 verfahren, jedoch wurden 104,3 mg (0,175 mmol) rac-Bisindenyl(phenylmethylsilyl) hafniumdichlorid verwendet, die Polymerisationstemperatur betrug 50 °C und die Polymerisationszeit wurde auf 8 h erhöht.
Erhalten wurden 350 g Polypropylen.
Die Aktivität des Metallocens betrug somit 420 g PP/g Metallocen x h.
VZ = 177 $cm^3$/g, $M_w$ = 200800, $M_w/M_n$ = 2,3, II = 97,2 %.

**Vergleichsbeispiel F**

Es wurde wie in Beispiel 4 verfahren, jedoch wurden 49,9 mg (0,099 mmol) rac-Ethylenbisindenylhafniumdichlorid eingesetzt und die Polymerisationszeit betrug 5 h.
2,3 kg Polypropylen wurden erhalten.
Die Aktivität des Metallocens betrug somit 9,2 kg PP/g Metallocen x h.
VZ = 57,1 $cm^3$/g, $M_w$ = 51000, $M_w/M_n$ = 2,2, II = 97,1 %.

**Beispiel 5**

Es wurde wie in Beispiel 1 verfahren, jedoch wurden 257 mg (0,43 mmol) rac-Bisindenyl(phenylmethylsilyl)hafniumdichlorid eingesetzt und die Polymerisationstemperatur betrug 40 °C.
Erhalten wurden 200 g Polypropylen.
Die Aktivität des Metallocens betrug 156 g PP/g Metallocen x h.
VZ = 147 $cm^3$/g, $M_w$ = 162500, $M_w/M_n$ = 2,6, II = 97,6 %.

**Vergleichsbeispiel G**

Es wurde wie in Beispiel 5 verfahren, jedoch wurden 144,1 mg (0,285 mmol) rac-Ethylenbisindenylhafniumdichlorid verwendet, die Polymerisationszeit betrug 2 h.
1,24 kg Polypropylen wurden erhalten.
Die Aktivität des Metallocens betrug somit 4,3 kg PP/g Metallocen x h.
VZ = 60,2 $cm^3$/g, $M_w$ = 55000, $M_w/M_n$ = 2,7, II = 97 %.

**Patentansprüche**

1. Verfahren zur Herstellung eines 1-Olefinpolymers durch Polymerisation eines 1-Olefins der Formel R-CH=$CH_2$, worin R eine Alkylgruppe mit 1 bis 28 C-Atomen ist, oder Copolymerisation dieser Olefine untereinander oder mit Ethylen, bei einer Temperatur von -60 bis 200 °C, bei einem Druck von 0,5 bis 60 bar, in Lösung, in Suspension oder in der Gasphase, in Gegenwart eines Katalysators, welcher aus einem Metallocen als Übergangsmetallverbindung und einem Aluminoxan der Formel (II)

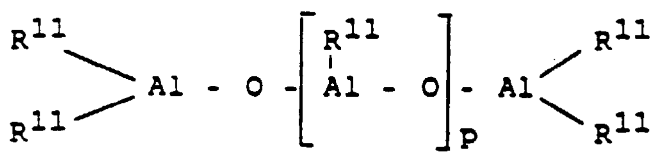

(II)

für den linearen Typ und/oder der Formel (III)

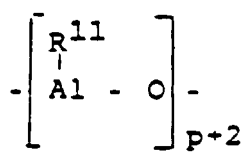

(III)

für den cyclischen Typ, wobei in den Formeln (II) und (III) $R^{11}$ eine $C_1$-$C_6$-Alkylgruppe bedeutet und p eine ganze Zahl von 2 bis 50 ist, besteht, dadurch gekennzeichnet, daß die Polymerisation in Gegenwart eines Katalysators durchgeführt wird, dessen Übergangsmetallkomponente eine Verbindung ist der Formel (I)

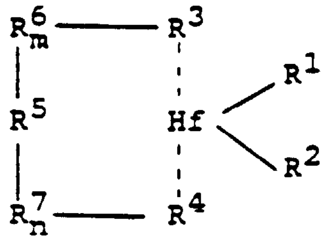

(I)

worin

$R^1$ und $R^2$ gleich oder verschieden sind und ein Wasserstoffatom, ein Halogenatom, eine $C_1$-$C_{10}$-Alkylgruppe, eine $C_6$-$C_{10}$-Arylgruppe, eine $C_2$-$C_{10}$-Alkenylgruppe, eine $C_7$-$C_{40}$-Arylalkylgruppe, eine $C_7$-$C_{40}$-Alkylarylgruppe oder eine $C_8$-$C_{40}$-Arylalkenylgruppe bedeuten,
$R^3$ und $R^4$ gleich oder verschieden sind und einen ein- oder mehrkernigen Kohlenwasserstoffrest, welcher mit dem Zentralatom eine Sandwichstruktur bilden kann, bedeuten,
$R^5$

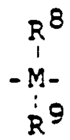 , 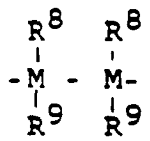 , 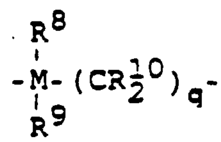 , 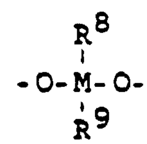 ,

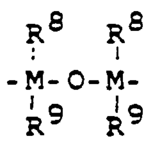 , 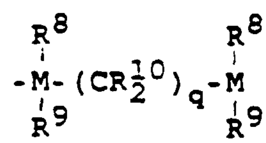 , 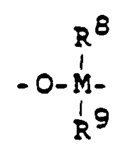 ,

$=BR^8$, $=AlR^8$, -Ge-, -Sn-, -O-, -S-, $=S=O$, $=SO_2$, $=NR^8$, $=PR^8$ oder $=P(O)R^8$ bedeutet, wobei
$R^8$, $R^9$ und $R^{10}$ gleich oder verschieden sind und $R^8$ eine $C_6$-$C_{10}$-Arylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeutet und $R^9$ und $R^{10}$ ein Wasserstoffatom, ein Halogenatom, eine $C_1$-$C_{10}$-Alkylgruppe, eine $C_6$-$C_{10}$-Arylgruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder $R^8$ und $R^9$ oder $R^8$ und $R^{10}$ jeweils zusammen mit den sie verbindenden Atomen einen Ring bilden,
M Silizium, Germanium oder Zinn und q 1, 2 oder 3 bedeuten, $R^6$ und $R^7$ gleich oder verschieden sind und eine Gruppe $=CR^8R^9$ bedeuten, wobei $R^8$ und $R^9$ die obengenannte Bedeutung haben,
m und n gleich oder verschieden sind und null, 1 oder 2 bedeuten, wobei m+n null, 1 oder 2 ist,

und daß gegebenenfalls das Metallocen der Formel (I) vor dem Einsatz in der Polymerisationsreaktion mit einem Aluminoxan der Formel (II) und/oder (III) voraktiviert wird.

**2.** Verfahren nach Anspruch 1, dadurch gekennzeichnet, daß die Übergangsmetallkomponente vor der Polymerisation mit einem Aluminoxan der Formel (II) und/oder (III) bei einer Temperatur von -78 bis 100°C 5 Minuten bis 60 Stunden voraktiviert wird.

**3.** Verfahren nach Anspruch 1, dadurch gekennzeichnet, daß die Übergangsmetallkomponente ein rac-Bisindenyl (arylalkylsilyl)hafniumdichlorid und das Aluminoxan ein Methylaluminoxan ist.

**4.** Verfahren nach Anspruch 1, dadurch gekennzeichnet, daß die Übergangsmetallkomponente rac-Bisindenyl(phenylmethylsilyl) hafniumdichlorid ist.

## Claims

1. A process for the preparation of a 1-olefin polymer by polymerization of a 1-olefin of the formula $R\text{-}CH{=}CH_2$ in which R is an alkyl group having 1 to 28 carbon atoms, or copolymerization of these olefins with one another or with ethylene, at a temperature from -60 to 200°C, at a pressure from 0.5 to 60 bar, in solution, in suspension or in the gas phase, in the presence of a catalyst which consists of a metallocene as transition metal compound and an aluminoxane of the formula (II)

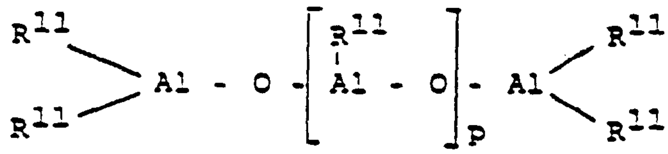

(II)

for the linear type and/or of the formula (III)

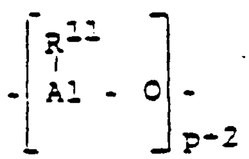

(III)

for the cyclic type, where in the formulae (II) and (III) $R^{11}$ denotes a $C_1$-$C_6$-alkyl group and p is an integer from 2 to 50, which comprises carrying out the polymerization in the presence of a catalyst whose transition metal component is a compound of the formula (I)

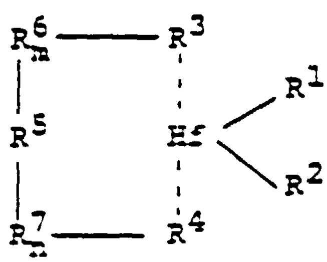

(I)

in which

$R^1$ and $R^2$ are identical or different and denote a hydrogen atom, a halogen atom, a $C_1$-$C_{10}$-alkyl group, a $C_6$-$C_{10}$-aryl group, a $C_2$-$C_{10}$-alkenyl group, a $C_7$-$C_{40}$-arylalkyl group, a $C_7$-$C_{40}$-alkylaryl group or a $C_8$-$C_{40}$-arylalkenyl group,
$R_3$ and $R_4$ are identical or different and denote a mononuclear or polynuclear hydrocarbon radical which can form a sandwich structure with the central atom,
$R^5$ denotes

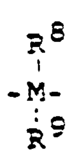 , 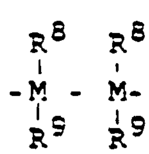 , 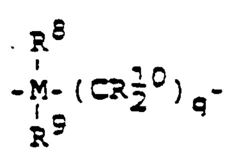 , 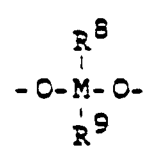 ,

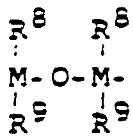 , 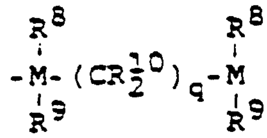 , 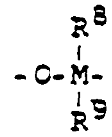 ,

$=BR^8$, $=AlR^8$, -Ge-, -Sn-, -O-, -S-, =S=O, $=SO_2$, $=NR^8$, $=PR^8$ or $=P(O)R^8$, in which

$R^8$, $R^9$ and $R^{10}$ are identical or different and $R^8$ denotes a $C_6$-$C_{10}$-aryl group, a $C_7$-$C_{40}$-arylalkyl group, a $C_8$-$C_{40}$-arylalkenyl group or a $C_7$-$C_{40}$-alkylaryl group and $R^9$ and $R^{10}$ denote a hydrogen atom, a halogen atom, a $C_1$-$C_{10}$-alkyl group, a $C_6$-$C_{10}$-aryl group, a $C_2$-$C_{10}$-alkenyl group, a $C_7$-$C_{40}$-arylalkyl group, a $C_8$-$C_{40}$-arylalkenyl group or a $C_7$-$C_{40}$-alkylaryl group or

$R^8$ and $R^9$ or $R^8$ and $R^{10}$ each form a ring together with the atoms linking them,

M denotes silicon, germanium or tin and q denotes 1, 2 or 3,

$R^6$ and $R^7$ are identical or different and denote a $=CR^8R^9$ group, in which $R^8$ and $R^9$ have the abovementioned meaning,

m and n are identical or different and denote zero, 1 or 2, where m+n is zero, 1 or 2,

and which optionally comprises, preactivating the metallocene of the formula (I) before it is employed in the polymerization reaction by means of an aluminoxane of the formula (II) and/or (III).

**2.** The process as claimed in claim 1, wherein the transition metal component is preactivated before the polymerization by an aluminoxane of the formula (II) and/or (III) at a temperature from -78 to 100°C for 5 minutes to 60 hours.

**3.** The process as claimed in claim 1, wherein the transition metal component is a rac-bisindenyl(arylalkylsilyl)hafnium dichloride and the aluminoxane is a methylaluminoxane.

**4.** The process as claimed in claim 1, wherein the transition metal component is rac-bisindenyl(phenylmethylsilyl) hafnium dichloride.

## Revendications

**1.** Procédé de fabrication d'un polymère d'oléfine-1 par polymérisation d'une oléfine-1 de formule $R\text{-}CH=CH_2$, dans laquelle R est un groupe alkyle comportant 1 à 28 atomes de carbone, ou par copolymérisation de ces oléfines entre elles ou avec l'éthylène, à une température de -60 à 200°C, sous une pression de 0,5 à 60 bar, en solution, en suspension ou en phase gazeuse, en présence d'un catalyseur qui est constitué d'un métallocène comme composé de métal de transition et d'un aluminoxane de formule (II)

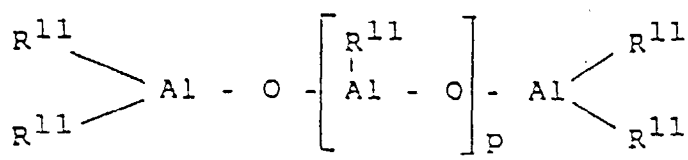 (II)

pour le type linéaire et/ou de formule (III))

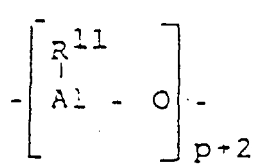 (III)

pour le type cyclique, $R^{11}$ représentant, dans les formules (II) et (III), un groupe alkyle en $C_1$-$C_6$, et p étant un nombre entier de 2 à 50, procédé caractérisé par le fait que la polymérisation est effectuée en présence d'un catalyseur dont la composante contenant le métal de transition est une composé de formule (I)

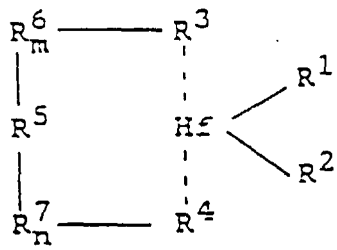

(I)

dans laquelle:

R1 et $R^2$ sont identiques ou différents et représentent un atome d'hydrogène, un atome d'halogène, un groupe alkyle en $C_1$-$C_{10}$,
un groupe aryle en $C_6$-$C_{10}$, un groupe alcényle en $C_2$-$C_{10}$, un groupe arylalkyle en $C_7$-$C_{40}$, un groupe alkylaryle en $C_7$-$C_{40}$ ou un groupe arylalcényle en $C_8$-$C_{40}$,
$R^3$ et $R^4$ sont identiques ou différents et représentent un radical hydrocarboné mono- ou poly-cyclique qui peut former avec l'atome central une structure sandwich
$R^5$ représente:

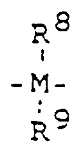 , 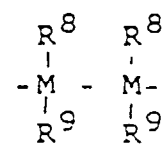 , 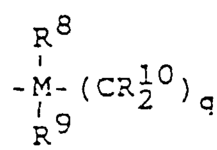 , 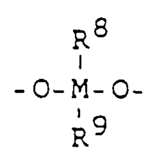 ,

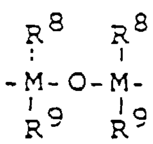 , 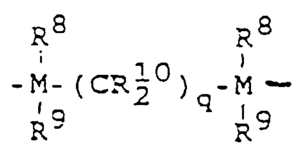 , 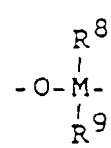 .

= $BR^8$ , = $AlR^8$ , -Ge , -Sn- , -O-, -S- , =S=O, =$SO_2$ , = $NR^8$ , = $PR^8$ ou =P(O)$R^8$ dans lesquels:
$R^8$ , $R^9$ et $R^{10}$ sont identiques ou différents et représentent $R^8$ un groupe aryle en $C_6$-$C_{10}$, un groupe arylalkyle en $C_7$-$C_{40}$, un groupe arylalcényle en $C_8$-$C_{40}$ ou un groupe alkylaryle en $C_7$-$C_{40}$ et $R_9$ et $R_{10}$ un atome d'hydrogène, un atome d'halogène, un groupe alkyle en $C_1$-$C_{10}$, un groupe aryle en $C_6$-$C_{10}$, un groupe alcényle en $C_2$-$C_{10}$, un groupe arylalkyle en $C_7$-$C_{40}$, un groupe arylalcényle en $C_8$-$C_{40}$ ou un groupe alkylaryle en $C_7$-$C_{40}$, ou
$R^8$ et $R^9$ ou $R^8$ et $R^{10}$ forment chacun un cycle avec les atomes qui les relient,
M représente le silicium, le germanium ou l'étain et q a pour valeur 1, 2 ou 3, $R^6$ et $R^7$ sont identiques ou différents et représentent un groupe =$CR^8R^9$ dans lequel $R^8$ et $R^9$ ont la signification ci-dessus indiquée, m et n sont identiques ou différents et ont pour valeur zéro, 1 ou 2, m + n étant égal à zéro, 1 ou 2, et par le fait que, le cas échéant, le métallocène de formule (I) est préactivé, avant son introduction dans la réaction de polymérisation, au moyen d'un aluminoxane de formule (II) et/ou (III).

2. Procédé selon la revendication 1, caractérisé par le fait que la composante contenant le métal de transition est préactivée avant la polymérisation avec un aluminoxane de formule (II) et/ou (III) à une température de -78 à 100°C pendant une durée de 5 minutes à 60 heures.

**3.** Procédé selon la revendication 1, caractérisé par le fait que la composante contenant le métal de transition est un dichlorure de rac-bis-indényl (arylalkylsilyl) hafnium et que l'aluminoxane est un méthylalminoxane.

**4.** Procédé selon la revendication 1, caractérisé par le fait que la composante contenant le métal de transition est le dichlorure de rac-bis-indényl (phénylméthylsilyl) hafnium.